# EUROPÄISCHE PATENTANMELDUNG

(11) **EP 1 188 970 A2**
(43) Veröffentlichungstag der Anmeldung: **20.03.2002**
(21) Anmeldenummer: 01122178.5
(22) Anmeldetag: 15.09.2001
(51) Int. Cl.: F16J 15/08

(54) **Ausgleichselement zur Anordnung zwischen zwei lösbar zu verbindenden und statisch abzudichtenden Bauteilen**

(30) Priorität: 19.09.2000 DE 10046183
(71) Anmelder: Schlemenat, Alfred, 45701 Herten (DE)
(72) Erfinder: Schlemenat, Alfred, 45701 Herten (DE)

(57) **Zusammenfassung**

Die Erfindung betrifft die Anordnung eines Ausgleichselements zwischen zwei lösbar zu verbindenden und abzudichtenden Bauteilen zur Reduzierung von Dichtproblemen, insbesondere für Verbindungen von Bauteilen unterschiedlichen Wärmeausdehnungsverhaltens oder von Bauteilen, an denen unterschiedliche Bauteilgeometrien oder Anschlusskonstruktionen ungleiche Verformungsdifferenzen an den zu verbindenden Bauteilen erzeugen.

Das Ausgleichselement (5) ist zwischen zwei Bauteilen (2, 3) angeordnet und in Richtung der Verbindungslängsachse (1) verspannt. Dem Innenraum (4) zugewandt weist das Ausgleichselement (5) eine Membranzone (6) auf. An deren Enden sind zwei nach außen gerichtete Begrenzungsprofile (7, 8) angeordnet, die mit beiden Bauteilen (2, 3) zusammenwirken. Die Membranzone (6) nimmt die Verformungsdifferenzen der beiden Bauteile und gleichzeitig die aus dem Innenraum (4) her anstehenden Druckbelastungen auf.

Besondere Vorteile stellen sich an den Verbindungen ein, die unter extremen Druck- und Temperaturbeanspruchungen oder unter ständigen Lastwechseln eine hohe Dichtheit aufweisen müssen. Bei einer Schweißdichtung wird eine absolute Dichtheit der Verbindung erreicht.

## Beschreibung

Die Erfindung betrifft die Anordnung eines Ausgleichselements zwischen zwei lösbar zu verbindenden und abzudichtenden Bauteilen zur Reduzierung von Dichtproblemen, insbesondere für Verbindungen von Bauteilen unterschiedlichen Wärmeausdehnungsverhaltens oder von Bauteilen, an denen unterschiedliche Bauteilgeometrien oder Anschlusskonstruktionen ungleiche Verformungsdifferenzen an den zu verbindenden Bauteilen erzeugen, beispielsweise für Verbindungen von Rohr- oder Zylinderenden mit einem ebenen Verschlußdeckel oder für Flansch- / Rohrbodenverbindungen an Wärmetauschern.

Unabhängig davon, ob eine Dichtung im Krafthaupt- oder im Kraftnebenschluß angeordnet ist, erfährt diese bei den bekannten Verbindungen, die den heutigen Stand der Technik darstellen (z.B. bei Belastungsänderungen), aufgrund der sich einstellenden Relativbewegungen der Verspann- und Dichtflächen zueinander eine zusätzliche Belastung in der Form, daß dem verspannten Dichtungskörper ein Walkprozeß aufgezwungen wird. Der Dichtungskörper nimmt somit zu den Druckspannungen zusätzliche Schubspannungen auf. Dieses führt bei instationären Betriebszuständen oft zu einem Versagen der Dichtung.

Verbindungen, die z.B. wegen der Problematik des abzudichtenden Mediums oder zur Vermeidung hoher Produktionsausfallkosten durch einen Anlagenstillstand infolge einer Undichtigkeit einerseits eine absolute Dichtheit aufweisen müssen, anderseits aber die Forderung einer bedingten Lösbarkeit der Verbindung gewährleisten müssen, werden mit einer sogenannten Schweißdichtung ausgeführt. Membran-Schweißdichtungen und Membran-Dichtringe sind z.B. in DIN-Normen, andere Ausführungen als Schweißringe mit einer Hohllippe in Werksnormen von Dichtungsherstellern aufgenommen. Gegenüber einer allgemeinen Schweißlippenausführung liegen die Vorteile der Ausführungen mit einer Hohllippe in der größeren Bewegungsaufnahme der zu verbindenden Bauteile zueinander. Bei extremen Verformungsdifferenzen, bei mehrmaligen Lastwechseln oder bei Veränderungen des Verspannungszustandes infolge auftretender Schraubenrelaxation versagen jedoch auch diese Ausführungen.

Aufgabe der Erfindung ist es daher, durch Anordnung und Verspannung eines elastischen Ausgleichselements zwischen zwei lösbar zu verbindenden und abzudichtenden Bauteilen die zuvor aufgeführten und bekannten Dichtprobleme zu reduzieren und diese bei einer Ausführung als Schweißdichtung vollkommen zu beseitigen.

Die Aufgabe wird erfindungsgemäß in der Weise gelöst, wie es im Patentanspruch 1 angegeben ist. Die Unteransprüche beziehen sich auf vorteilhafte weitere Ausgestaltungen der Erfindung.

Entsprechend dem Anspruch 1 wird zwischen den beiden lösbar zu verbindenden Bauteilen ein Profilkörper angeordnet. Der dem Innenraum zugewandte Bereich ist als Membranzone ausgeführt. Die beiden Enden der Membranzone sind in zwei verstärkte Trag- oder Begrenzungsprofile eingebunden. In dem außen liegenden, dem Innenraum abgewandten Bereich weist der Profilkörper einen offenen Querschnitt auf. Dadurch ergeben sich zwei unabhängig voneinander verformbare Hälften, die nur durch die relativ dünnwandige Membranzone miteinander verbunden sind. Jede Hälfte des Ausgleichselements wirkt über ein Begrenzungsprofil mit dem anliegenden Bauteil kraft- und/oder formschlüssig so zusammen, dass die auftretenden Verformungen der beiden Bauteile in die Membranzone geleitet werden, beispielsweise durch eine ineinandergreifende Nut/ Feder-Konstruktionen entsprechend dem Unteranspruch 9.

Die in Richtung der Verbindungslängsachse aufzubringenden Verspannkräfte werden gemäß dem Unteranspruch 2 von einem Distanzkörper, der in dem nach außen liegenden, dem Druckraum abgewandten Bereich zwischen den beiden Begrenzungsprofilen angeordnet ist, aufgenommen. Entsprechend der Fertigungs- und Montagemöglichkeiten wird dieser ein- oder mehrteilig ausgeführt. Eine weitere Möglichkeit zur Aufnahme der axialen Verspannkräfte ergibt sich gemäß dem Unteranspruch 3, wobei parallel zur Verbindungslängsachse an den beiden Begrenzungsprofilen aufeinander zulaufende Stützprofile angeordnet werden, die sich gegeneinander axial abstützen.

Sämtliche Verformungen die sich z.B. aufgrund eines unterschiedlichen Stülp- oder Wärmeausdehnungsverhaltens zwischen den verspannten Bauteilen während des Betriebes einstellen, werden somit in die Membranzone des Ausgleichselements geleitet. Im Innenraum anstehende Druckbelastungen werden ebenfalls von der Membranzone aufgenommen wie die Belastungen, die durch einen Abbau von Eigenspannungen, die beispielsweise durch einen Schweißvorgang an dem Profilkörper entstanden sind.

Die erfindungsgemäße Gestaltung des Ausgleichselements bewirkt, daß die auftretenden Relativbewegungen der zu verbindenden Bauteile sich nur außerhalb des druckführenden und vom Medium beaufschlagten Bereichs an dem Ausgleichselement einstellen können. Relativverschiebungen der Flächen zwischen dem Ausgleichselement und den abzudichtenden Bauteilen, zwischen denen Dichtungen angeordnet und verspannt sind, treten im Gegensatz zu den bekannten Dichtungsanordnungen nicht auf. Durch die Anordnung und Verspannung eines Ausgleichselementes können die zuvor beschriebenen Einflüsse nicht mehr zu einem Versagen von abzudichtenden Verbindungen und somit zu hohen Produktionsausfallkosten und Umweltbelastungen führen. Besondere Vorteile stellen sich an den Verbindungen ein, die unter extremen Druck- und Temperaturbeanspruchungen oder unter ständigen Lastwechseln eine absolute Dichtheit aufweisen müssen.

Bei den Verbindungen, die aufgrund der Erfordernis mit einer Schweißdichtung auszuführen sind, bewirkt die Verschweißung des Ausgleichselements mit den abzudichtenden Bauteilen eine absolute Dichtheit der Verbindung. Die Anordnung von Scherquerschnitten, z.B. als Nut/Feder-Konstruktionen, entlastet die beiden Schweißnähte von jeglichen Kräften. Die Schweißnaht hat nur eine abdichtende Funktion.

Die vorteilhafte weitere Gestaltung des Ausgleichselements entsprechend der übrigen Unteransprüche richtet sich nach dem abzudichtenden Medium (z.B. Berücksichtigung von Spaltkorrosion), der erforderlichen Dichtung oder nach der Ausführungsart der Verbindung (z.B. Anordnung an einem Normflansch).

Um grundlegende Aussagen über Größenordnungen der sich in der Membranzone einstellenden Verformungen und Spannungen unter Annahme realistischer Verformungsdifferenzen und Druckbelastungen zu erhalten, wurden mittels Spannungsanalysen dreidimensionale Untersuchungen durchgeführt. Die ermittelten Verformungen und Spannungen bestätigen das optimale Zusammenwirken der zu verbindenden Bauteile mit dem Ausgleichselement. Die konstruktive Gestaltung hinsichtlich der schweißtechnischen Ausführung des Profilkörpers wird durch den Verlauf und die Lage der maximalen und minimalen Spannungen bestimmt.

Ausführungsbeispiele der Erfindung werden anhand der beiliegenden Zeichnungen näher erläutert.

Es zeigen:
- Fig.1: Anordnung eines Ausgleichselements mit einer Schweißdichtung an einer lösbaren Verbindungsanordnung, dargestellt an einem Flansch mit einem ebenen Verschlußdeckel. Die Verspannkräfte werden von einem Distanzkörper aufgenommen.
- Fig.2: Anordnung eines Ausgleichselements, dargestellt an einer paarigen Flanschverbindung. Die Verspannkräfte werden von zwei Abstützschenkeln aufgenommen. Eine Dichtung ist jeweils zwischen einem Flansch und dem Ausgleichselement angeordnet.
- Fig.3: Anordnung eines Ausgleichselements mit einer Schweißdichtung an einer lösbaren Verbindungsanordnung, dargestellt an einem Flansch mit einem ebenen Verschlußdeckel. Die Verspannkräfte werden direkt von den beiden Begrenzungsprofilen aufgenommen.

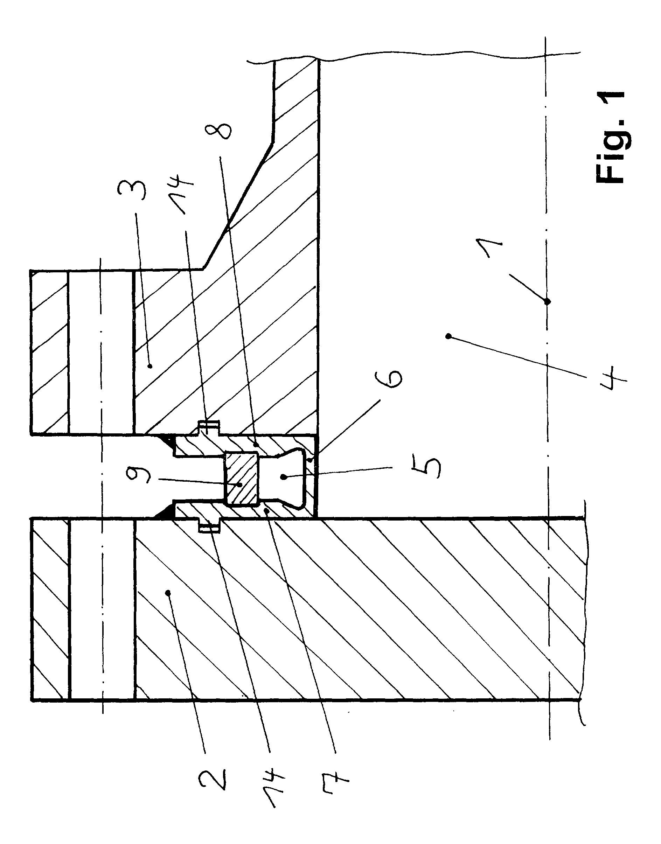

Figur 1 zeigt die Verbindung von einem auf der Verbindungslängsachse 1 angeordneten Flansch 3 mit einem ebenen Verschlußdeckel 2, zwischen denen ein Ausgleichselement 5 verspannt ist. Dieses weist einen nach aussen hin offenen Querschnitt auf. Dem Innenraum 4 zugewandt liegt die Membranzone 6. An dieser sind an beiden Enden zwei nach außen gerichtete Begrenzungsprofile 7, 8 angeordnet. Zur Aufnahme und Abtragung der axialen Verspannkraft liegt zwischen diesen ein Distanzkörper 9. Die Verformungsdifferenzen der beiden Bauteile und die gleichzeitig aus dem Innenraum 4 her anstehenden Druckbelastungen werden auf die Membranzone 6 übertragen. Beide Bauteile 2, 3 sind in den Bereichen ihrer Stirnflächen mit den Begrenzungsprofilen 7, 8 verschweißt. Die Schweißnähte sind reine Dichtnähte, da die im rechten Winkel zur Verbindungslängsachse 1 auftretenden Verformungen zwischen den beiden Bauteilen 2, 3 und dem Profilkörper 5 von der Nut/Federkonstruktion 14 übertragen werden.

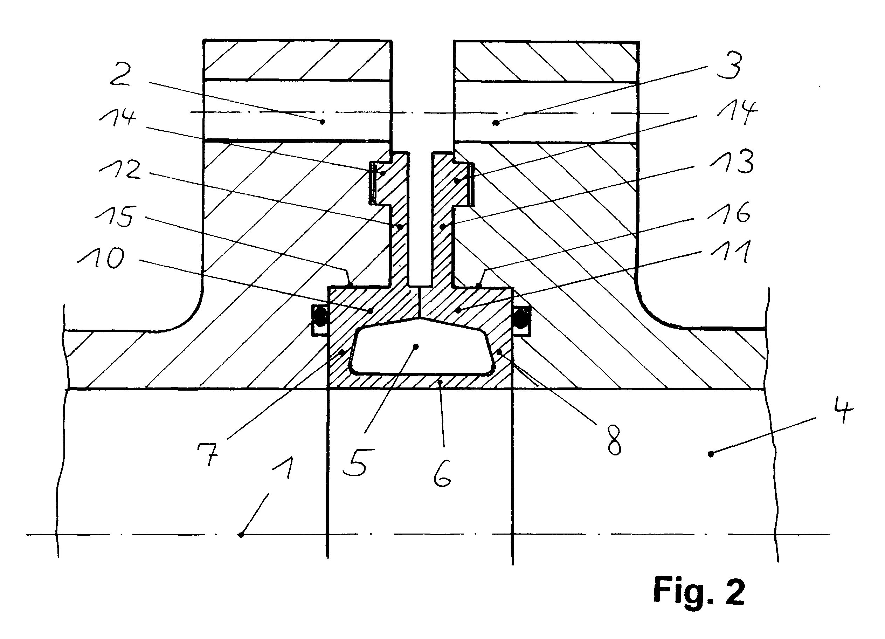

Figur 2 zeigt die Anordnung eines Ausgleichselements an einer paarigen Flanschverbindung. Auf der Verbindungslängsachse 1 ist zwischen dem einen Flansch 2 und dem anderen Flansch 3 ein Ausgleichselement 5 in den Ausnehmungen 15, 16 angeordnet. Zur Aufnahme und Abtragung der axialen Verspannkraft sind an den beiden Begrenzungsprofilen 7, 8 zwei Abstützschenkel 10, 11 angeordnet, die sich gegeneinander axial abstützen. An diesen sind zwei nach außen gerichtete Wangen 12, 13 angearbeitet, die an den Stirnflächen der beiden Bauteile 2, 3 anliegen. Eine ineinandergreifende Nut/Feder-Konstruktionen 14 überträgt jeweils die im rechten Winkel zur Verbindungslängsachse 1 auftretenden Verformungen der beiden Bauteile 2, 3 über die Abstützschenkel 10, 11 auf die Begrenzungsprofile 7, 8. An diesen ist dem Innenraum 4 zugewandt die Membranzone 6 angearbeitet. Diese nimmt die Verformungsdifferenzen der beiden Bauteile und gleichzeitig vom Innenraum 4 her anstehende Druckbelastungen auf. Schweißnähte zur Herstellung des Profilkörpers sind nicht dargestellt. Diese werden an Stellen mit niedrigen Spannungen angeordnet, die mittels FEM-Spannungsanalysen errechnet werden. Zwei an den beiden Flanschen im Kraftnebenschluss angeordnete Dichtungen garantieren die Dichtheit der Verbindung. Radiale Verformungsdifferenzen beeinflussen nicht die Standkraft der Dichtungen.

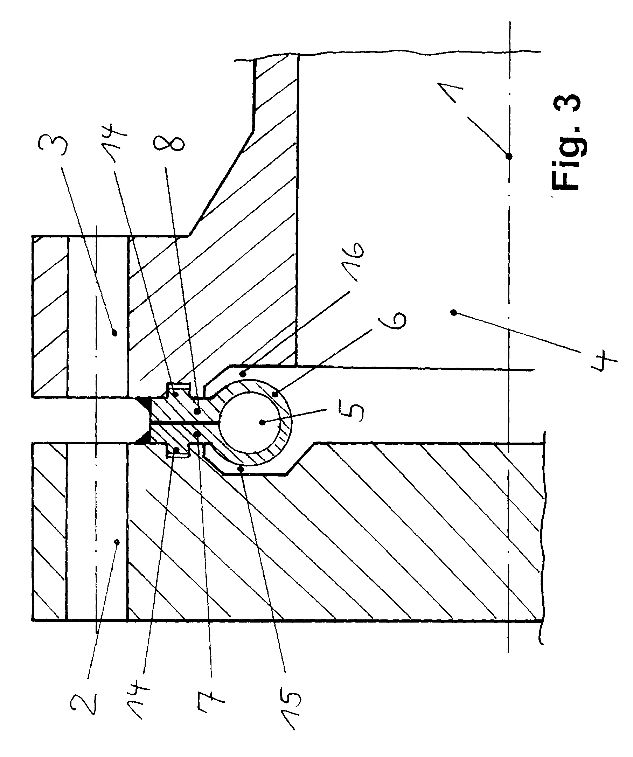

Figur 3 zeigt die Anordnung eines Ausgleichselements 5 mit einer Schweißdichtung, ebenfalls dargestellt an einem Flansch 3 mit einem ebenen Verschlußdeckel 2. Beide Bauteile weisen Ausnehmungen 15, 16 zur Aufnahme des Profilkörpers 5 auf. Die dem Innenraum 4 zugewandte Membranzone 6 zeigt einen Rohrquerschnitt. An den offenen Enden sind zwei nach außen gerichtete Begrenzungsprofile 7, 8 angeordnet. Sie liegen direkt aneinander und nehmen die axiale Verspannkraft auf. Das Zusammenwirken der Begrenzungsprofile 7, 8 mit den beiden Bauteile 2, 3 erfolgt über Mittel 14 durch ineinandergreifende Nut/Federn. Auftretende Verformungen des Flansches 3 und des Verschlußdeckels 2 werden auf den Profilkörper 5 übertragen, wobei von der Membranzone 6 die Verformungsdifferenzen der beiden Bauteile und die gleichzeitig aus dem Innenraum 4 her anstehenden Druckbelastungen aufgenommen werden. Flansch und Verschlußdeckel sind in den Bereichen ihrer Stirnflächen mit den Begrenzungsprofilen 7, 8 verschweißt. Die Schweißnähte sind reine Dichtnähte. Schweißnähte zur Herstellung des Profilkörpers sind an diesem Ausführungsbeispiel nicht dargestellt.

## Patentansprüche

1. Ausgleichselement zwischen zwei auf einer Verbindungslängsachse (1) lösbar zu verbindenden und statisch abzudichtenden Bauteilen, mit dem einen Bauteil (2), mit dem anderen Bauteil (3) und einem Innenraum (4),
**dadurch gekennzeichnet,**
**dass** das Ausgleichselement ein metallischer Profilkörper (5) ist, dass dieser nach aussen, dem Innenraum (4) abgewandt einen offenen Querschnitt aufweist und nach innen, dem Innenraum (4) zugewandt als Membranzone (6) ausgeführt ist, dass die Membranzone (6) an jedem Ende je ein Begrenzungsprofil (7, 8) aufweist, dass der Profilkörper (5) zwischen den beiden Bauteilen (2, 3) angeordnet ist und mit diesen so zusammenwirkt, dass sowohl die Verformungen des einen Bauteils (2) über das eine Begrenzungsprofil (7) als auch die Verformungen des anderen Bauteils (3) über das andere Begrenzungsprofil (8) auf die Membranzone (6) übertragen werden, wobei die Belastungen aus den Verformungsdifferenzen der beiden Bauteile (2, 3), aus den Schweißeigenspannungen des Profilkörpers (5) und aus einem im Innenraum (4) anstehenden Druck von der Membranzone (6) aufgenommen werden.

2. Ausgleichselement nach Anspruch 1,
**dadurch gekennzeichnet,**
**dass** ein ein- oder mehrteiliger Distanzkörper (9) zwischen den beiden Begrenzungsprofilen (7, 8) angeordnet ist.

3. Ausgleichselement nach Anspruch 1,
**dadurch gekennzeichnet,**
**dass** an jedem Begrenzungsprofil (7, 8) ein parallel zur Verbindungslängsachse (1) aufeinander zulaufender Abstützschenkel (10, 11) angeordnet ist, wobei sich diese gegeneinander axial abstützen.

4. Ausgleichselement nach Anspruch 3,
**dadurch gekennzeichnet,**
**dass** an jedem Abstützschenkel (10, 11) eine nach außen gerichtete Wange (12, 13) angeordnet ist.

5. Ausgleichselement nach Anspruch 4,
**dadurch gekennzeichnet,**
**dass** auftretende Verformungen des einen Bauteils (2) über die eine Wange (12) und auftretende Verformungen des anderen Bauteils (3) über die andere Wange (13) auf den Profilkörper (5) übertragen werden.

6. Ausgleichselement nach einem oder mehreren der Ansprüche 1 bis 5,
**dadurch gekennzeichnet,**
**dass** das eine Bauteil (2) und/oder das andere Bauteil (3) eine Ausnehmung (15, 16) zur teilweisen oder vollständigen Aufnahme des Profilkörpers (5) aufweist.

7. Ausgleichselement nach einem oder mehreren der Ansprüche 1 bis 6,
**dadurch gekennzeichnet,**
**dass** das eine Bauteil (2) mit dem einen Begrenzungsprofil (7) oder mit der einen Wange (12) und das andere Bauteil (3) mit dem anderen Begrenzungsprofil (8) oder der anderen Wange (13) verschweißt ist.

8. Ausgleichselement nach einem oder mehreren der Ansprüche 1 bis 7,
**dadurch gekennzeichnet,**
**dass** die Übertragung der im rechten Winkel zur Verbindungslängsachse (1) auftretenden Verformungen zwischen den beiden Bauteilen (2, 3) und dem Profilkörper (5) über Mittel (14) erfolgt, die einen Abscherquerschnitt aufweisen.

9. Ausgleichselement nach einem oder mehreren der Ansprüche 1 bis 8,
**dadurch gekennzeichnet,**
**dass** an dem Profilkörper (5) Dichtungen angeordnet sind.

10. Ausgleichselement nach einem oder mehreren der Ansprüche 1 bis 9,
**dadurch gekennzeichnet,**
**dass** nur an einem der Begrenzungsprofile (7 oder 8) ein parallel zur Verbindungslängsachse (1) verlaufender Abstützschenkel (10 oder 11) angeordnet ist, wobei sich dieser an dem gegenüberliegenden Begrenzungsprofil (7 oder 8) axial abstützt.
